# EUROPEAN PATENT SPECIFICATION

(11) **EP 0 638 505 B1**
(45) Date of publication and mention of the grant of the patent: **28.01.1998**
(21) Application number: 94305865.1
(22) Date of filing: 08.08.1994
(51) Int. Cl.: B65H 45/22

(54) **An apparatus and method for hemming edges of stretch film and a film having hemmed edges**
Eine Vorrichtung und ein Verfahren zum Einsäumen von Rändern einer gespannten Folie und eine Folie mit eingesäumten Rändern
Dispositif et procédé pour ourler les bords d'une feuille tendue et feuille avec bords ourlés

(30) Priority: 09.08.1993 US 103588
(43) Date of publication of application: 15.02.1995
(73) Proprietor: MIMA INCORPORATED, Glenview, Illinois 60025-5811 (US)
(72) Inventor: Scherer, Philip G., Fort Lauderdale, Florida 33309 (US)
(74) Representative: Rackham, Stephen Neil

(56) References cited:
- WO-A-83/02442
- FR-A- 2 569 672
- GB-A- 2 099 360
- GB-A- 2 220 925
- US-A- 4 236 704
- US-A- 4 905 451

## Description

The present invention relates to a method and apparatus for reinforcing edges of a stretch film.

Thin strips of elastic stretchable plastic material have become widely used for wrapping goods or boxes of goods to be stored or shipped. For example, it is common practice to stack a plurality of boxes on a pallet for shipping and to secure the boxes together, and with respect to the pallet, by wrapping them with a film or strip of resilient plastic material or, in other words, a stretch-wrap. Such stretch-wrapped materials are quite thin and are subject to rupturing or tearing at the edges, particularly in situations where the goods being wrapped have relatively sharp corners or uneven surfaces. Heretofore, it has been suggested to reinforce the edges of such stretch-wrapped materials by gathering or bunching the edges to provide a so-called hem. While such hemming is effective for reinforcing the edges, the bunching may be uneven in appearance and effectiveness and provides ribs or ridges in the ultimate package, which may be objectionable.

GB-A-2,099,360 discloses an apparatus for hemming a strip of plastic film maintained under tension and moving along a first pre-determined path of travel comprising a first guide member traversing said path of travel in a position for engaging one side of said film, a second guide member downstream of said first guide member and a folding member positioned between said first and second guide members for folding said marginal portions toward a 180° arc with respect to said film to form a substantially flat hem.

US-A-4,905,451 describes a stretch wrap material formed from an elongated, substantially flat film, in which opposite margins of the film are folded to form triple thickness layers for reinforcement.

According to a first aspect of the present invention, an apparatus for hemming a strip of plastic film maintained under tension and moving along a first predetermined path of travel comprises a first guide member traversing said path of travel in a position for engaging one side of said film, a second guide member downstream of said first guide member and a folding member positioned between said first and second guide members for folding said marginal portions toward a 180° arc with respect to said film to form a substantially flat hem, and is characterised in that said first guide member has an end disposed inwardly of an adjacent edge of the film so that said marginal portions of the film project beyond said end, and said second guide member being positioned for pressing against a side of said film opposite from said one side, and for directing said film at an acute angle from said first path of travel for causing said marginal portion of the film to fold over said end of the first guide member at an acute angle from the plane of said film.

According to a second aspect of the present invention, a method of hemming a strip of a stretch-wrap plastic film comprises maintaining said strip under tension and moving said strip along a first pre-determined planar path of travel, engaging a first side of said strip with a first guide member while leaving a marginal portion of the strip unsupported, changing the direction of travel of the strip leaving said guide member to a second path of travel disposed at an acute angle to said first path of travel, and thereby causing said marginal portion to fold at an acute angle with respect to the remainder of said strip, thereafter guiding and further folding said marginal portion beyond a 90° angle with respect to the remainder of said strip while maintaining the strip under tension and thereby causing said marginal portion to be folded through 180° into a flattened condition against the remainder of the strip, and pressing a side of said strip opposite from said one side for promoting the formation of a flat, smooth hem.

A stretch-wrap film in accordance with the present invention is formed with marginal hems which are flat and unbunched and simply comprise two flat layers of material joined along a fold line. In order to form the hems, an unhemmed strip of film is pulled over a roller having a width less than the width of the strip, so that margins of the strip project beyond ends of the roller. Means is provided for guiding the strip away from the roller at an angle with respect to the plane of the strip approaching the roller for causing the margins to fold through an acute angle over the ends of the roller to initiate forming of the hems. Additional members are positioned adjacent the path of travel of the strip for engaging the partially folded margins for causing the margins to complete the folding action through 180°, and a pressing roller is disposed for ensuring flattening of the strip and the hems.

An example of the present invention will now be described with reference to the accompanying drawings, in which:-
Figure 1 is a simplified perspective view showing an apparatus for forming a hemmed film or strip in accordance with the method of the present invention;
Figure 2 is a plan view of the apparatus shown in Figure 1;
Figure 3 is a side elevational view of the apparatus shown in Figure 1;
Figure 4 is an enlarged fragmentary sectional view taken along line 4 - 4 in Figure 3; and
Figure 5 is an enlarged sectional view taken along line 5 - 5 in Figure 3.

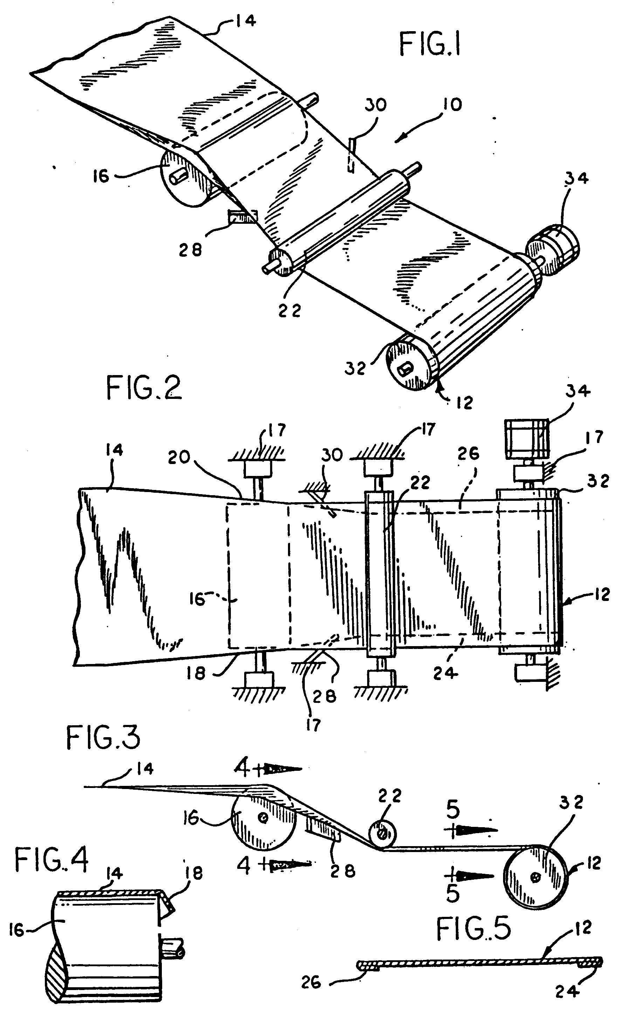

Referring now more specifically to the drawings, wherein like parts are designated by the same numerals throughout the various figures, an apparatus 10 for forming a hemmed, stretch-wrap film or strip 12 in accordance with the present invention is shown in a simplified and somewhat schematic form in Figures 1 through 3. The apparatus is supplied with a strip or film 14 of stock resiliently stretchable plastic stretch-wrap material of any known composition. For example, such films are often composed of polyethylene, polyvinyl chloride, ethylene vinyl acetate, ethylene methyl acetate, and ethylene copolymers with higher alpha olefins. The film or strip 14 of stock material is delivered from a suitable source of supply, not shown, which source may be a film-producing extruding apparatus or the like of known construction, or a roll of previously formed, unhemmed sheet material.

As shown, the flat strip 14 advances to the apparatus 10 along a first path of travel disposed in a first plane and passes over a first guide member or hemming roller 16 rotatably mounted on a suitable frame 17. As shown best in Figures 1 and 2, the strip 14 has a pre-determined initial width which is greater than the length of the guide member or roller 16. As a result, opposite marginal portions 18 and 20 of the strip 14 project outwardly beyond opposite ends of the roller 16.

A second hemming or pressing member or roller 22 is rotatably mounted on the frame 17 in the apparatus 10 downstream from the roller 16 and at a location for directing the strip 14 passing over the roller 16 downwardly along a path of travel in a plane disposed at an acute angle with respect to the plane of the incoming portion of the strip 14. The strip 14 is maintained under tension, as will be discussed below, and as a result of such tension and the angular relationship between the portions of the strip approaching and leaving the roller 16, the margins 18 and 20 are folded downwardly through acute angles over the opposite ends of the roller 16 to initiate the hemming process, as shown in Figure 4. It has been found that the optimum deflection angle of the film passing over the roller 16 is about 20° to 30°. This arrangement causes the marginal portions 18 and 20 to fold through an acute angle approaching 90°.

In order to complete folding of the marginal portions 18 and 20 to form opposite marginal hems 24 and 26, guide bars or folding members 28 and 30 are mounted on the frame 17 adjacent the path of travel of the film at locations between the rollers 16 and 22. The guide bars are constructed for engaging the partially folded marginal portions 18 and 20 and guiding them beyond a 90° angle. It has been found that once the marginal portions 18 and 20 are folded beyond 90°, they will continue to fold through a full 180° to provide the flat double thickness hems 24 and 26. The pressure applied to the film by the roller 22 ensures that the film and the hems will remain in a substantially flat condition.

In the apparatus shown for illustrating the present invention, a take-up roller 32, driven by a motor 34, is provided. While the rollers 16 and 22 are idler rollers, the roller 32 is driven at a speed sufficient to maintain the stock material strip 14 and the finally hemmed film or strip 12 under tension for causing the folding of the marginal portions 18 and 20, as discussed above. It is noted however, that the hemmed strip could be maintained under tension in different ways. For example, the guide members or rollers 16 and 22 and the guide bars 28 and 30 could be incorporated into a machine or hand-held unit of known construction, not shown, for applying the stretch-wrap material to products to be wrapped, and the desired tension could be maintained by anchoring an end of the hemmed film 12 to the goods and then pulling the strip through the rollers and guide bars as the strip is wound around the goods.

## Claims

1. An apparatus (10) for hemming a strip of plastic film (14) maintained under tension and moving along a first predetermined path of travel comprising a first guide member (16) traversing said path of travel in a position for engaging one side of said film (14), a second guide member (22) downstream of said first guide member (16) and a folding member (28, 30) positioned between said first and second guide members for folding said marginal portions (18, 20) toward a 180° arc with respect to said film to form a substantially flat hem (24, 26), characterised in that said first guide member (16) has an end disposed inwardly of an adjacent edge of the film (14) so that said marginal portions (18, 20) of the film project beyond said end, and said second guide member (22) being positioned for pressing against a side of said film (14) opposite from said one side, and for directing said film (14) at an acute angle from said first path of travel for causing said marginal portion (18, 20) of the film to fold over said end of the first guide member (16) at an acute angle from the plane of said film (14).

2. An apparatus according to claim 1, which includes a driven roller (32) disposed downstream from said second guide member (22) for pulling said film (14) over said first and second guide members and maintaining said film (14) under tension.

3. An apparatus according to claim 2, wherein said driven roller (32) comprises means for winding said strip into a roll.

4. An apparatus according to any preceding claim, wherein said first and second guide members are idler rollers.

5. A method of hemming a strip (14) of a stretch-wrap plastic film comprising maintaining said strip under tension and moving said strip along a first pre-determined planar path of travel, engaging a first side of said strip with a first guide member (16) while leaving a marginal portion (18, 20) of the strip unsupported, changing the direction of travel of the strip leaving said guide member (16) to a second path of travel disposed at an acute angle to said first path of travel, and thereby causing said marginal portion (18, 20) to fold at an acute angle with respect to the remainder of said strip, thereafter guiding and further folding said marginal portion (18, 20) beyond a 90° angle with respect to the remainder of said strip while maintaining the strip under tension and thereby causing said marginal portion (18, 20) to be folded through 180° into a flattened condition against the remainder of the strip, and pressing a side of said strip opposite from said one side for promoting the formation of a flat, smooth hem (24, 26).

6. A method according to claim 5, which includes forming a hem (24, 26) at a margin of said strip opposite from said marginal portion in the same manner as said first mentioned hem is formed.

7. An apparatus (10) for hemming a strip of plastic film (14) of pre-determined width maintained under tension and moving along a first predetermined planar path of travel, comprising a first idler roller (16) traversing said path of travel and positioned for engaging one side of said film (14), a second idler roller (22) in position for engaging a side of said film opposite from said one side, and guide bars (28,30) positioned between said first and second rollers, characterised in that said first roller (16) has a length less than said predetermined width and is positioned so that opposite marginal portions (18,20) of said film project beyond opposite ends of said roller, said second roller (22) directing said film from said first roller (16) along a second path of travel disposed at an acute angle with respect to said first path of travel, whereby said marginal portions (18,20) of said strip projecting beyond opposite ends of said first roller (16) fold around opposite ends of said first roller (16), and in that said guide bars engage said marginal portions (18,20) and fold said marginal portions beyond a 90° angle with respect to the remainder of said strip for thereby causing said marginal portions (18,20) to assume a 180° folded condition to provide double thickness hems at opposite margins of said strip, said second roller (22) pressing against said strip for promoting flattening of said hems.

## Patentansprüche

1. Vorrichtung (10) zum Säumen eines Streifens einer Kunststoffolie (14), die unter Spannung gehalten ist und sich entlang einer ersten vorbestimmten Bewegungsbahn bewegt, umfassend ein erstes Führungsglied (16), das die Bewegungsbahn an einer Stelle kreuzt, um an einer Seite der Folie (14) anzugreifen, ein zweites Führungsglied (22) stromabwärts des ersten Führungsgliedes (16) und ein Faltglied (28, 30), das zwischen dem ersten und dem zweiten Führungsglied angeordnet ist, um die Randbereiche (18, 20) in einem 180°-Bogen bezüglich der Folie zu falten, um einen im wesentlichen flachen Saum (24, 26) zu bilden, dadurch gekennzeichnet, daß das erste Führungsglied (16) ein Ende umfaßt, das einwärts einer benachbarten Kante der Folie (14) angeordnet ist, so daß Randbereiche (18, 20) der Folie über das Ende hinaus vorragen, und wobei das zweite Führungsglied (22) positioniert ist, um gegen eine der erwähnten Seite gegenüberliegende Seite der Folie (14) zu drücken und um die Folie (14) unter einem spitzen Winkel von der ersten Bewegungsbahn wegzulenken, um zu erreichen, daß sich der Randbereich (18, 20) der Folie über das Ende des ersten Führungsgliedes (16) unter einem spitzen Winkel bezüglich der Ebene der Folie (14) faltet.

2. Vorrichtung nach Anspruch 1, die eine angetriebene Rolle (32) umfaßt, die stromabwärts des zweiten Führungsgliedes (22) angeordnet ist, um die Folie (14) über das erste und zweite Führungsglied zu ziehen und die Folie (14) unter Spannung zu halten.

3. Vorrichtung nach Anspruch 2, wobei die angetriebene Rolle (32) Mittel umfaßt, um den Streifen zu einer Rolle zu wickeln.

4. Vorrichtung nach einem der vorangegangenen Ansprüche, wobei das erste und zweite Führungsglied nicht angetriebene Rollen sind.

5. Verfahren zum Säumen eines Streifens (14) einer Kunststoffolie für Stretch-Hüllen umfassend ein Halten des Streifens unter Spannung und Bewegen des Streifens entlang einer ersten vorbestimmten ebenen Bewegungsbahn, Angreifen an einer ersten Seite des Streifens mittels eines ersten Führungsgliedes (16), wobei ein Randbereich (18, 20) des Streifens ununterstützt bleibt, Wechseln der Bewegungsrichtung des Streifens, der das Führungsglied (16) verläßt, in eine zweite Bewegungsbahn, die bezüglich der ersten Bewegungsbahn unter einem spitzen Winkel angeordnet ist und wodurch erreicht wird, daß sich der Randbereich (18, 20) unter einem spitzen Winkel bezüglich des Restes des Streifens faltet, anschließendes Führen und weiteres Falten des Randbereichs (18, 20) über einen 90° Winkel hinaus bezüglich des Restes des Streifens, wobei der Streifen unter Spannung gehalten wird und wodurch erreicht wird, daß sich der Randbereich (18, 20) um 180° in eine flache Stellung gegen den Rest des Streifens faltet, und Pressen einer der erwähnten Seite gegenüberliegenden Seite des Streifens, um die Bildung eines flachen, glatten Saumes (24, 26) zu fördern.

6. Verfahren nach Anspruch 5, welches das Bilden eines Saumes (24, 26) an einem dem Randbereich gegenüberliegenden Rand des Streifens auf die gleiche Weise umfaßt, in der der erste erwähnte Saum gebildet ist.

7. Vorrichtung (10) zum Säumen eines Streifens einer Kunststoffolie (14) von vorbestimmter Breite, die unter Spannung gehalten ist und sich entlang einer ersten vorbestimmten ebenen Bewegungsbahn bewegt, umfassend eine erste nicht angetriebene Rolle (16), die die Bewegungsbahn kreuzt und so positioniert ist, daß sie an einer Seite der Folie (14) angreift, eine zweite nicht angetriebene Rolle (22) in einer Position, um an einer der erwähnten Seite gegenüberliegenden Seite der Folie anzugreifen, und Führungsstäbe (28, 30), die zwischen der ersten und der zweiten Rolle positioniert sind, dadurch gekennzeichnet, daß die erste Rolle (16) eine Länge hat, die geringer ist als die vorbestimmte Breite und so positioniert ist, daß gegenüberliegende Randbereiche (18, 20) der Folie über gegenüberliegende Enden der Rolle hinaus vorragen, wobei die zweite Rolle (22) die Folie von der ersten Rolle (16) entlang einer zweiten Bewegungsbahn umlenkt, die unter einem spitzen Winkel bezüglich der ersten Bewegungsbahn angeordnet ist, wodurch Randbereiche (18, 20) des Streifens, die über die gegenüberliegenden Enden der ersten Rolle (16) hinaus vorstehen, sich um die gegenüberliegenden Enden der ersten Rolle (16) herumfalten, und dadurch, daß die und die Randbereiche um einen Winkel über 90° hinaus bezüglich des Restes des Streifens herumfalten, wodurch erreicht wird, daß die Randbereiche (18, 20) eine um 180° gefaltete Stellung einnehmen, um Säume doppelter Stärke an gegenüberliegenden Rändern des Streifens zu schaffen, wobei die zweite Rolle (22) gegen den Streifen drückt, um eine Glättung der Säume zu fördern.

## Revendications

1. Appareil (10) pour ourler une bande de film plastique (14) maintenue sous tension et se déplaçant le long d'une première voie de cheminement prédéterminée qui comprend un premier organe de guidage (16) qui traverse ladite voie de cheminement dans une position pour se trouver en prise avec un premier côté dudit film (14), un second organe de guidage (22) en aval dudit premier organe de guidage (16) et un organe de pliage (28, 30) positionné entre lesdits premier et second organes de guidage pour plier lesdites parties marginales (18, 20) suivant un arc de 180° par rapport audit film, afin de former un ourlet substantiellement plat (24,26), caractérisé en ce que ledit premier organe de guidage (16) a une extrémité qui est disposée en deçà du bord adjacent du film (14) de sorte que lesdites parties marginales (18, 20) du film dépassent au-delà de ladite extrémité, ledit second organe de guidage (22) étant positionné pour exercer une poussée contre un côté dudit film (14), opposé audit premier côté, et pour diriger ledit film (14) à angle aigu par rapport à ladite première voie de cheminement pour faire en sorte que ladite partie marginale (18, 20) du film soit pliée par dessus ladite extrémité du premier organe de guidage (16) à angle aigu par rapport au plan dudit film (14).

2. Appareil selon la revendication 1, qui comprend un rouleau entraîné (32), disposé en aval dudit second organe de guidage (22) pour tirer ledit film (14) sur lesdits premier et second organes de guidage et maintenir ledit film (14) sous tension.

3. Appareil selon la revendication 2, dans lequel ledit rouleau entraîné (32) comprend un moyen pour enrouler ladite bande en un rouleau.

4. Appareil selon l'une quelconque des revendications précédentes, dans lequel lesdits premier et second organes de guidage sont des rouleaux tendeurs.

5. Procédé pour ourler une bande (14) de film plastique d'emballage sous tension comprenant le fait de maintenir ladite bande sous tension et de faire se déplacer ladite bande le long d'une première voie de cheminement plane prédéterminée, le fait de mettre en prise un premier côté de ladite bande avec un premier organe de guidage (16) tout en laissant une partie marginale (18, 20) de la bande sans support, le fait de changer la voie de cheminement de la bande après ledit organe de guidage (16) en une seconde voie de cheminement disposée à angle aigu de ladite première voie de cheminement, ce qui fait que ladite partie marginale (18, 20) est pliée à angle aigu par rapport au reste de ladite bande, et ensuite, le fait de guider et de plier encore ladite partie marginale (18, 20) au-delà d'un angle de 90° par rapport au reste de ladite bande tout en maintenant la bande sous tension, et faire ainsi en sorte de plier ladite partie marginale (18, 20) à 180° dans un état aplati contre le reste de la bande, et le fait d'exercer une pression sur le côté de la bande opposé audit premier côté pour améliorer la formation d'un ourlet plat et égal (24,26).

6. Procédé selon la revendication 5, qui comprend le fait de former un ourlet (24, 26) au niveau d'une marge de ladite bande opposée à ladite partie marginale de la même manière qu'est formé le premier ourlet.

7. Appareil (10) pour ourler une bande de film plastique (14) de largeur prédéterminée maintenue sous tension et se déplaçant le long d'une première voie de cheminement plane prédéterminée, qui comprend un premier rouleau tendeur (16) qui traverse ladite voie de cheminement et est positionné pour se trouver en prise avec un côté dudit film (14), un second rouleau tendeur (22) en position pour se trouver en prise avec un côté dudit film opposé audit premier côté, et des glissières de guidage (28, 30) positionnées entre lesdits premier et second rouleaux, caractérisé en ce que ledit premier rouleau (16) a une longueur inférieure à ladite largeur prédéterminée et est positionné de sorte que des parties marginales opposées (18, 20) dudit film dépassent au delà des extrémités opposées dudit rouleau, ledit second rouleau (22) dirigeant ledit film à partir dudit premier rouleau (16) le long d'une seconde voie de cheminement disposée à angle aigu par rapport à ladite première voie de cheminement, pour faire en sorte que lesdites parties marginales (18, 20) de ladite bande qui dépassent au-delà des extrémités opposées dudit premier rouleau (16) soient pliées autour des extrémités opposées dudit premier rouleau (16); et en ce que lesdites glissières de guidage viennent en prise avec lesdites parties marginales (18, 20) et plient lesdites parties marginales au-delà d'un angle de 90° par rapport au reste de ladite bande pour ainsi faire en sorte que lesdites parties marginales (18, 20) se trouvent dans un état plié à 180° afin d'offrir des ourlets à double épaisseur au niveau de marges opposées de ladite bande, ledit second rouleau (22) exerçant une pression contre ladite bande pour améliorer l'aplatissement desdits ourlets.
